**Europäisches Patentamt**

**European Patent Office**

**Office européen des brevets**

(11) Veröffentlichungsnummer: **0 492 100 A2**

(12) **EUROPÄISCHE PATENTANMELDUNG**

(21) Anmeldenummer: **91118975.1**

(22) Anmeldetag: **07.11.91**

(51) Int. Cl.⁵: **G05D 23/00**

(30) Priorität: **20.12.90 DE 4040910**

(43) Veröffentlichungstag der Anmeldung:
**01.07.92 Patentblatt 92/27**

(84) Benannte Vertragsstaaten:
**AT BE CH DE DK ES FR GB GR IT LI LU NL SE**

(71) Anmelder: **EMERSON ELECTRIC GmbH & Co.**
**Heerstrasse 111**
**W-7050 Waiblingen(DE)**

(72) Erfinder: **Gottschalk, Dieter W.**
**Holbeinweg 5**
**W-7000 Stuttgart 1(DE)**
Erfinder: **Möller, Sigurd**
**Brühlstrasse 55**
**W-7311 Notzingen(DE)**

(74) Vertreter: **Rüger, Rudolf, Dr.-Ing. et al**
**Patentanwälte Dr.-Ing. R. Rüger Dipl.-Ing. H.P.**
**Barthelt Webergasse 3 Postfach 348**
**W-7300 Esslingen/Neckar(DE)**

(54) **Fühlerelement für eine zustandsabhängige Schalt-, Regel- oder Steuereinrichtung.**

(57) Ein Fühlerelement (1) für eine zustandsabhängige Schalt-, Regel- oder Steuereinrichtung weist ein einziges Fühlergehäuse (3) auf, in dem wenigstens zwei getrennte Mittel (9, 14) zur Erfassung einer einzigen Zustandsgröße oder mehrerer verschiedener Zustandsgrößen angeordnet sind, denen jeweils eigene Signalausgangsmittel (10, 15) zugeordnet sind.

Fig. 1

Die Erfindung betrifft ein auf einen physikalischen Zustand an einem Meßort ansprechendes Fühlerelement für eine zustandsabhängige Schalt-, Regel- oder Steuereinrichtung, mit einem am Meßort anzuordnenden, Mittel zur Erfassung der jeweiligen Zustandsgröße aufnehmenden Fühlergehäuse, dem Signalausgangsmittel für den jeweiligen Zustand kennzeichnende Signale zugeordnet sind, die von den Zustandsgrößen-Erfassungsmitteln erzeugt werden.

Beispielsweise zur Temperaturregelung bei beheizten Geräten und Anlagen, wie etwa Waschmaschinen, Warmwasserbereiter, Heizkessel u.ä. werden gegebenenfalls programmgesteuerte Temperaturregel- oder Steuereinrichtungen verwendet, die nicht nur bestimmte Betriebsbedingungen einregeln oder eine vorgegebene Betriebsablaufsteuerung bewirken, sondern auch die Aufgabe haben, beim Erreichen bestimmter Maximal- oder Minimalwerte der Temperatur eine Schaltfunktion auszulösen, indem sie bspw. eine elektrische Heizvorrichtung aus- oder einschalten, um damit den vorgegebenen Sicherheitsanforderungen zu genügen. Grundsätzlich Ähnliches gilt auch für Geräte, bei denen andere Zustandsgrößen, z.B. der Druck oder die Feuchte eines Mediums, eine Rolle spielen. Um den Istwert der jeweiligen Zustandsgröße an einem geeigneten Meßort festzustellen, werden Fühlerelemente verwendet, die entsprechend der zu erfassenden Zustandsgröße aufgebaut und an einem zweckmäßigen Meßort angeordnet sind. Diese Fühlerelemente geben an einem Signalausgang für die jeweils überwachte Zustandsgröße kennzeichnende Signale ab, die elektrisch oder mechanischer Natur sein können und in einer zugeordneten Schalt-, Regel- oder Steuereinrichtung verarbeitet werden.

So werden bspw. zur Temperaturregelung bei elektrischen Haushaltsgeräten, wie Waschmaschinen oder Geschirrspülmaschinen, in der Praxis seit langem elektromechanische Temperaturregler nach dem Flüssigkeitsausdehnungsprinzip verwendet. Diese sogenannten Thermostate bestehen typischerweise im wesentlichen aus einem Fühlerelement (Sensor) mit einem an dem jeweiligen Meßort anzuordnenden, in der Regel aus Metall bestehenden Fühlergehäuse, das ein bestimmtes Volumen einer das Mittel zum Erfassen der Temperatur am Meßort bildenden Ausdehnungflüssigkeit umschließt, einem Kapillarrohr als Signalausgangsmittel und einem Weggeber, der an das Kapillarrohr angeschlossen und in der Regel als Wellenbalg oder Membrane ausgebildet ist. Dieser Weggeber erfüllt die Funktion eines Signalwandlers, der das ihm über die in dem Kapillarrohr enthaltene Flüssigkeits- oder Gasfüllung übermittelte Signal in vorbestimmter Abhängigkeit in einen Stellweg umsetzt.

Die erwähnten Elemente sind gasdicht miteinander verbunden und bilden ein vollständig mit Flüssigkeitsmedium gefülltes System. Bei Erwärmung des Fühlergehäuses dehnt sich das in diesem enthaltene Flüssigkeitsmedium aus, der Druck im System steigt, wobei die Drucksteigerung über das Kapillarrohr auf den Weggeber übertragen wird; dieser dehnt sich aus und setzt damit die an dem Meßort erfaßte Temperaturänderung in einen entsprechenden Stellweg um. Dieser Stellweg wird etwa zur Betätigung eines elektrischen Schalters benutzt, der bspw. die Energiezufuhr in eine elektrische Heizung unterbricht.

Mit steigenden Anforderungen an die Temperaturkonstanz während des Betriebsablaufs solcher Geräte und Anlagen steigen auch die Anforderungen an die Schaltgenauigkeit dieser elektromechanischen Thermostate. Weil dieser Schaltkonstanz prinzipbedingt bei elektromechanischen Thermostaten Grenzen gesetzt sind, werden in vermehrtem Maße elektronische Temperaturregler eingesetzt, die mit entsprechenden Fühlerelementen (Sensoren) z.B. auf der Basis von NTC- oder PTC-Halbleitern arbeiten.

Ein grundsätzlicher Nachteil dieser elektronischen Regler liegt darin, daß mit ihnen nur mit verhältnismäßig großem Aufwand sogenannte eigensichere Regelsysteme aufbaubar sind. Darunter sind Regelsysteme verstanden, die bei Versagen bspw. des Temperaturreglers zuverlässig das Auftreten schädlicher Übertemperaturen verhindern und im Falle eines eigenen Defektes ebenfalls eine Abschaltung des Heizsystems herbeiführen.

Aus diesem Grunde ist es häufig notwendig, in einem Temperaturregelsystem einen elektronischen Regler zusammen mit einem elektromechanischen Temperaturbegrenzer einzusetzen.

Das bedeutet aber, daß ein solches Temperaturregel-System zwei verschiedene Temperatur-Fühlerelemente (Sensoren) erforderlich macht, die nach unterschiedlichen Prinzipien arbeiten und die getrennt voneinander häufig räumlich nahe beieinander in das Gerät bzw. in die Anlage eingebaut wurden. Im Falle einer Waschmaschine müssen beide Fühlerelemente je für sich dauerhaft wasserdicht eingesetzt werden.

Dadurch ist nicht nur ein verhältnismäßig hoher Aufwand bedingt, sondern es wird auch die Störungsanfälligkeit des Gerätes erhöht, während andererseits die beiden getrennten Fühlerelemente auch getrennte Meßorte bedingen, was häufig im Hinblick auf die Schalt- und Regelgenauigkeit unerwünscht ist.

Eine grundsätzlich ähnliche Problematik tritt auch bei Geräten auf, bei denen andere Zustandsinformationen für den Betriebsablauf erforderlich sind, indem bspw. ein Druck und eine Temperatur etc. laufend erfaßt und überwacht werden müssen.

Aufgabe der Erfindung ist es, hier abzuhelfen.

Zur Lösung dieser Aufgabe ist das eingangs genannte Fühlerelement erfindungsgemäß dadurch gekennzeichnet, daß in dem Fühlergehäuse wenigstens zwei getrennte Mittel zur Erfassung einer einzigen Zustandsgröße oder mehrerer verschiedener Zustandsgrößen angeordnet sind, denen jeweils eigene Signalausgangsmittel zugeordnet sind.

Mit diesem Fühlerelement wird zum einen der Herstellungs- und Montageaufwand gegenüber der Verwendung getrennter Fühlerelemente wesentlich herabgesetzt, zum anderen aber ist gewährleistet, daß die Meßwerterfassung durch die in dem einzigen Fühlergehäuse untergebrachten verschiedenen Meßwertgrößen-Erfassungsmittel an dem gleichen Meßort erfolgt, dessen räumliche Ausdehnung erforderlichenfalls sehr klein gewählt werden kann.Bei einem Temperaturregelsystem wird so bspw. die Temperaturerfassung zur Temperaturregelung und zur Übertemperaturbegrenzung an dem gleichen Ort vorgenommen.

Insbesondere für Waschmaschinen, Warmwasserbereiter, Heizkessel etc. ist es aus den eingangs geschilderten Gründen zweckmäßig, die an dem Meßort herrschende Temperatur mittels zweier physikalisch unterschiedlicher Sensoren zu erfassen. Zu diesem Zwecke kann bei dem neuen Fühlerelement zumindest ein erstes Zustandsgrößenerfassungsmittel mit mechanischer Signalabgabe und wenigstens ein zweites Zustandsgrößenerfassungsmittel mit elektrischer Signalabgabe ausgebildet sein. Abhängig von dem jeweiligen Verwendungszweck ist aber auch eine Ausbildung des Fühlerelementes denkbar, bei der zumindest ein erstes und zumindest ein zweites Zustandsgrößenerfassungsmittel mit elektrischer oder mechanischer Signalabgabe arbeiten.

Im Rahmen der mit am häufigsten zu überwachenden Zustandsgrößen ist es vorteilhaft, wenn das Fühlerelement wenigstens ein Zustandsgrößenerfassungsmittel zur Erfassung einer Temperatur und/oder eines Druckes und/oder der Feuchte eines Mediums ausgebildet ist. Selbstverständlich können darüber hinaus auch andere Zustandsgrößen im Einzelfall von Bedeutung sein, etwa die Helligkeit, der Geräuschpegel, um nur einige weitere Beispiele zu nennen.

Zur Abhilfe bei den eingangs geschilderten Schwierigkeiten bei Waschmaschinen und dergl. ist eine Ausführungsform des Fühlerelementes zweckmäßig, bei der das erste Zustandsgrößenerfassungsmittel ein in dem Fühlergehäuse angeordnetes, auf die Temperatur am Meßort ansprechendes Ausdehnungsmedium und das zweite Zustandsgrößenerfassungsmittel ein elektrisches Temperaturfühlglied aufweist. Das mechanische Zustandsgrößenerfassungsmittel ist für die Temperaturbegrenzung und den Trockengehschutz vorgesehen, während das elektrische Zustandsgrößenerfassungsmittel (bspw. NTC- oder PCT-Halbleiter) für die elektronische Betriebsablaufssteuerung bestimmt ist.

Die praktische Ausbildung eines solchen Fühlerelementes kann in verschiedener Weise erfolgen; sie ist letztendlich von den Meßbedingungen am Meßort,den dort vorhandenen Platz- und Einbauverhältnissen sowie auch von den Herstellungsbedingungen abhängig. Als vorteilhaft hat es sich erwiesen, wenn das Ausdehnungsmedium in einem abgeschlossenen Raum des Fühlergehäuses angeordnet ist, wobei das Fühlergehäuse zumindest eine mit dem Ausdehnungsmedium und/oder der Wandung des Fühlergehäuses in gut wärmeleitender Verbindung stehende Kammer enthält, in der sich das elektrische Temperaturfühlglied befindet.

Diese Kammer kann, abhängig von der Art des verwendeten elektrischen Temperaturfühlglieds, gestaltet und abgedichtet oder sogar auch offen gelassen sein. Insbesondere dann, wenn das Fühlerelement Erschütterungen ausgesetzt ist und unter Nässe- oder Feuchtigkeitseinfluß steht, ist es zweckmäßig, daß die das elektrische Temperaturfühlglied aufnehmende Kammer zumindest teilweise mit einer das Temperaturfühlglied umschließenden Vergußmasse abdichtend gefüllt ist. Unter dem Begriff "Vergußmasse" sind hierbei alle für solche Zwecke gebräuchlichen und infragekommenden Materialien verstanden, die bspw. auf der Basis künstlicher oder natürlicher Harze bzw. Kunststoffe hergestellt sind und die häufig thermoplastisch sind. Auch wärmeleitende Pasten etc. zählen dazu.

Abhängig von den am Meßort herrschenden Meßbedingungen kann es von Vorteil sein, wenn in dem topf- oder rohrartigen Fühlergehäuse der das Ausdehnungsmedium enthaltende Raum im Bodenbereich abgeteilt ist und die das elektrische Temperaturfühlglied aufnehmende Kammer in einem daran anschließenden Gehäusebereich ausgebildet ist, in dem sie leicht montiert werden kann. Zur Vereinfachung der Herstellungsverhältnisse kann dabei die Kammer von dem das Ausdehnungsmedium enthaltenden Raum durch eine Zwischenwand abgetrennt sein, wobei durch die Kammer wenigstens ein in den das Ausdehnungsmedium enthaltenden Raum mündendes Kapillarrohr geführt ist, das - wie bereits erläutert - ein Signalausgangsmittel bildet.

Die Anordnung kann aber auch derart getroffen sein, daß die Kammer in einem in das Fühlergehäuse von außen her zugänglich abgedichtet eingesetzten rohr- oder topfförmigen Teilgehäuse ausgebildet ist, das zumindest teilweise von dem Ausdehnungsmedium umgeben ist.

Eine weitere Alternative, die für andere Einsatzbedingungen zweckmäßig ist, besteht darin, daß in dem topf- oder rohrförmigen Fühlergehäuse die das elektrische Temperaturfühlglied aufnehmende Kammer und der von dieser abgeteilte, das Ausdehnungsmedium enthaltende Raum sich bis zum Boden des Fühlergehäuses erstreckend ausgebildet sind. Zu diesem Zwecke kann das Fühlergehäuse bspw. durch eine Längstrennwand in die Kammer und den das Ausdehnungsmedium enthaltenden Raum unterteilt sein.

Darüber hinaus sind auch Lösungen denkbar, bei denen das bereits erwähnte, das elektrische Temperaturfühlglied - oder das Ausdehnungsmedium - aufnehmende Teilgehäuse mit dem Boden des Fühlergehäuses verbunden ist.

Besonders einfache Verhältnisse ergeben sich, wenn das elektrische Temperaturfühlglied unmittelbar in dem Ausdehnungsmedium untergetaucht angeordnet ist, so daß die das elektrische Temperaturfühlglied aufnehmende "Kammer" in diesem Falle lediglich durch die das Fühlerglied umgebende Schutzhülle gebildet ist, die gegebenenfalls auch unmittelbar bei dessen Herstellung fabrikmäßig aufgebracht sein kann. Wenn es darauf ankommt, ein Fühlerelement zu schaffen, das sich durch eine besonders kurze Reaktionszeit auszeichnet, kann eine Ausführungsform verwendet werden, bei der das Ausdehnungsmedium in einem in dem Fühlergehäuse angeordneten gewendelten Rohr enthalten ist, während das elektrische Temperaturfühlglied in dem von dem Rohr umschlossenen Raum liegt, der gleichzeitig als "Kammer" dient. Dabei ist das gewendelte Rohr zweckmäßigerweise nahe einer Wandung des Fühlergehäuses angeordnet, wobei das Fühlergehäuse mit einer das elektrische Temperaturfühlglied umschließenden Vergußmasse zumindest teilweise gefüllt ist, die erforderlichenfalls auch eine die Wärmeleitfähigkeit beeinflussende Eigenschaft - im Sinne der Erhöhung oder der Verringerung der Wärmeleitfähigkeit - aufweisen kann.

Die das Temperaturfühlglied aufnehmende Kammer braucht im übrigen nicht immer verschlossen zu sein. Die Anordnung kann auch derart getroffen sein, daß die Kammer im Bereiche des Meßortes nach außen zu offen ist, wobei das in der Kammer angeordnete Temperaturfühlglied von einer mediumsdichten Schutzhülle umgeben ist. Diese Ausführungsform kann auch derart abgewandelt sein, daß das Temperaturfühlglied in einem hermetisch verschlossenen Schutzgehäuse angeordnet ist, während in der Kammer durch eine Querwand ein nach außen zu abgedichteter Teil abgeteilt ist, durch den die Signalausgangsmittel des Temperaturfühlgliedes verlaufen, die in der Regel durch dessen Anschlußdrähte gebildet sind.

Das erwähnte Schutzgehäuse, das in einer bevorzugten Ausführungsform aus Glas besteht, kann in der Querwand abgedichtet gehaltert sein.

In Fällen, in denen es darauf ankommt, am Meßort neben der Temperatur noch eine andere Zustandsgröße, bspw. einen Druck zu messen, kann das Fühlerelement mit Vorteil derart ausgebildet sein, daß ein erstes Zustandsgrößenerfassungsmittel ein in einem Raum des Fühlergehäuses enthaltenes, auf die Temperatur am Meßort ansprechendes Ausdehnungsmedium aufweist, während ein zweites Zustandsgrößenerfassungsmittel in einer zumindest im Bereiche des Meßortes nach außen zu offenen Kammer des Fühlergehäuses angeordnet ist. Mit einfachen technischen Mitteln läßt sich dies dadurch verwirklichen, daß die Kammer in Gestalt eines das topfförmige Fühlergehäuse durchdringenden Rohres ausgebildet ist, das von dem Ausdehnungsmedium zumindest teilweise umgeben ist. In diesem Rohr ist dann das Fühlglied untergebracht, das naturgemäß auch ein elektrisches Temperaturfühlglied sein kann, wie dies bereits erläutert wurde. Das Rohr kann dann einenends Halterungs- und/oder Klemmittel für das Fühlglied aufweisen, womit ein Fühlerelement geschaffen wurde, das universell einsetzbar ist, indem in das Rohr jeweils das der entsprechenden zu erfassenden Zustandsgröße zugeordnete Fühlerelement eingesetzt wird. Dazu können die Halterungs- und/oder Klemmmittel einen zur Aufnahme eines Befestigungsstutzens des Fühlgliedes oder eines Klemmelementes, bspw. einer Druckschraube, dienenden Anschlußteil aufweisen, der gegebenenfalls mit einem Gewinde versehen ist.

Das Fühlergehäuse des neuen Fühlerelementes ist in der Regel, ebenso wie die in diesem gegebenenfalls enthaltenen Trenn- oder Querwände, ein Metallgehäuse, bspw. aus Kupfer, Bronze, Messing oder nichtrostendem Stahl, ohne daß es insoweit aber eine Beschränkung gäbe. Für spezielle Anwendungsfälle sind auch durchaus Ausführungsformen denkbar, bei denen das Fühlergehäuse oder einzelne seiner Teile aus einem anderen Material, etwa Kunststoff oder Glas, hergestellt sind. Bei mehrteiligen Fühlergehäusekonstruktionen sind die Teile in der Regel abgedichtet miteinander verlötet oder verschweißt; allgemein geht das Bestreben dahin, die Konstruktion so zu wählen, daß möglichst wenig Fügefugen vorhanden sind, was sich durch weitgehende Verwendung z.B. von tiefgezogenen Teilen erreichen läßt.

Für die elektrische Temperaturerfassung kommen alle Fühlglieder infrage, die zu diesem Zwecke bekannt sind, d.h. nicht nur die erwähnten NTC- und PCT-Glieder, sondern auch Bauelemente, die als Thermoelemente oder auf der Basis von Ni 100 etc. aufgebaut sind. In entsprechender Weise können zur mechanischen Temperaturerfassung in Einzelfällen auch Bimetallelemente, Dehnstäbe und dergl. verwendet werden, während zur Druckerfassung auf elektrischem Wege, z.B. piezoelektrische Fühler infragekommen, während die mechanische Druckerfassung durch kleine Druckdosen etc. geschehen kann. Schließlich ist zu erwähnen, daß die Signalausgangsmittel für die elektrischen Fühlglieder nicht nur deren aus dem Fühlergehäuse nach außen geführte Anschlußdrähte, sondern auch an dem Fühlergehäuse oder an mit diesen verbundenen Teilen vorgesehene Anschlußklemmen oder Steckanschlüsse und dergleichen mit umfassen.

In der Zeichnung sind Ausführungsbeispiele des Gegenstandes der Erfindung dargestellt. Es zeigen:

Fig. 1 ein Fühlerelement gemäß der Erfindung, in einer ersten Ausführungsform, zur Erfassung der Temperatur am Meßort auf mechanischem und elektrischem Wege, im axialen Schnitt, in einer Seitenansicht, zusammen mit einer Prinzipskizze der von dem Fühlerelement gesteuerten Schalt- und Regeleinrichtung für ein Heizelement,

Fig. 2 das Fühlerelement nach Fig. 1, in einer abgewandelten zweiten Ausführungsform, im axialen Schnitt und in einer Seitenansicht,

Fig. 3 das Fühlerelement nach Fig. 1, in einer abgewandelten dritten Ausführungsform, im axialen Schnitt, in einer Seitenansicht,

Fig. 4 das Fühlerelement nach Fig. 1, in einer abgewandelten vierten Ausführungsform, im axialen Schnitt, in einer Seitenansicht,

Fig. 5 das Fühlergehäuse des Fühlerelements nach Fig.1, im Querschnitt und in einer abgewandelten Ausführungsform,

Fig. 6 das Fühlerelement nach Fig. 1, in einer abgewandelten fünften Ausführungsform, im axialen Schnitt, in einer Seitenansicht,

Fig. 7 das Fühlerelement nach Fig. 1, in einer abgewandelten sechsten Ausführungsform, im axialen Schnitt, in einer Seitenansicht,

Fig. 8 das Fühlerelement nach Fig. 1, in einer abgewandelten siebten Ausführungsform, im axialen Schnitt, in einer Seitenansicht,

Fig. 9 das Fühlerelement nach Fig. 8, in einer Ausführungsform, bei der das Temperaturfühlglied durch ein Druckfühlglied ersetzt ist, in einer entsprechenden Schnittdarstellung, und

Fig.10 das Fühlerelement nach Fig. 9, in einer abgewandelten Ausführungsform und in einer entsprechenden Schnittdarstellung.

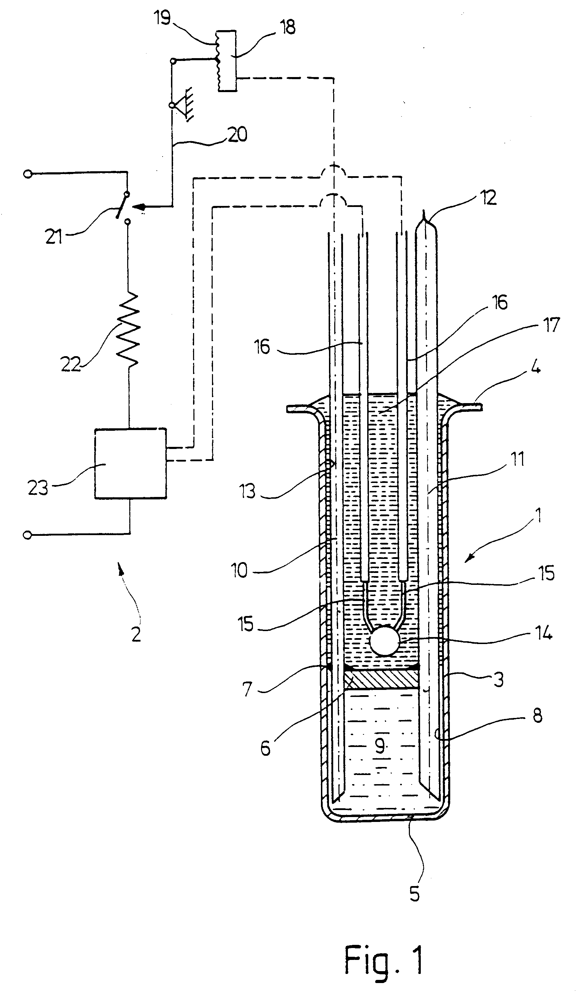

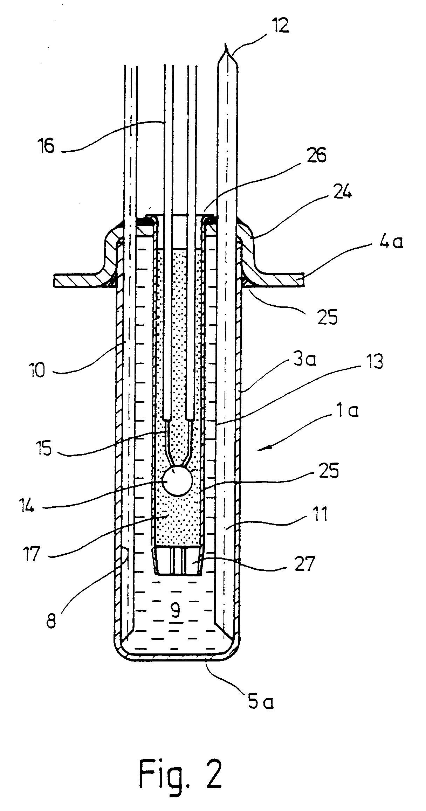

Das in den Fig. 1 bis 8 dargestellte Fühlerelement 1 bzw. 1a ... 1f dient dazu, die an einem Meßort, bspw. in der Trommel einer Waschmaschine herrschende Temperatur auf zwei getrennten Wegen, nämlich einmal auf mechanische und zum anderen auf elektrische Weise zu erfassen und für den erfaßten Temperaturwert kennzeichnende Signale an eine Schalt-, Steuer- oder Regeleinrichtung abzugeben, die in Fig. 2 lediglich beispielhaft bei 2 schematisch angedeutet ist und deren Zusammenwirken mit dem Fühlerelement 1 noch erläutert werden wird.

Das Fühlerelement 1 weist ein topfartiges, tiefgezogenes, zylindrisches Fühlergehäuse 3 auf, das aus einem geeigneten, z.B. gegen Waschlauge beständigen Metall, etwa Edelstahl, besteht. Das patronenförmige Fühlergehäuse 3 ist im Bereiche seiner Gehäuseöffnung mit einem angeformten Befestigungsflansch 4 versehen und enthält einen im Abstand von dem angeformten Boden 5 abgedichtet eingesetzten Zwischenboden, der durch eine Zwischenwand 6 gebildet ist, die bei 7 mit der Gehäuseinnenwand verlötet ist. Durch die Zwischenwand 6 wird im Bodenbereich ein Raum 8 abgeteilt, der mit einer Ausdehnungsflüssigkeit 9 gefüllt ist. In den Raum 8 ragen ein Kapillarrohr 10 und ein Füllrohr 11, von denen das Kapillarrohr 10 Signalausgangsmittel bildet, während das Fühlrohr 11 in bekannter Weise zum Einfüllen der Ausdehnungsflüssigkeit 9 dient und nach dem Fühlvorgang endseitig bei 12 abgedichtet verschlossen ist.

Auf dem Raum 8 gegenüberliegenden Seite ist durch die Zwischenwand 6 eine Kammer 13 begrenzt, durch die das Kapillarrohr 10 und das Fühlrohr 11 durchgeführt sind und in der ein elektrisches Temperaturfühlglied 14 in Gestalt einer NTC-Halbleiterpille angeordnet ist, dessen zwei Anschlußdrähte mit 15 bezeichnet und von einem Isolierschlauch 16 umgeben durch die Kammer 13 nach außen geführt sind. Sie bilden elektrische Signalausgangsmittel.

Die Kammer 13 ist mit einer elektrisch isolierenden Vergußmasse 17 ausgegossen, die das elektrische Temperaturfühlglied 14 und dessen Anschlußdrähte 15 vollständig umgibt, derart, daß das Eindringen von Feuchtigkeit ausgeschlossen ist. Ein Beispiel für eine solche Vergußmasse ist eine durch Vernetzung aushärtbare Masse auf der Basis von Epoxidharz. Grundsätzlich wäre zu diesem Zwecke auch Silikonkleber brauchbar, wie es auch denkbar ist, eine Wärmeleitpaste zu verwenden, die sich durch hohe Wärmeleitfähigkeit auszeichnet, so daß der Wärmefluß von dem die zylindrische Außenwand des Fühlergehäuses 3 umgebenden Medium zu dem elektrischen Temperaturfühlglied 14 möglichst wenig behindert ist. Das Temperaturfühlglied 14 ist im übrigen nahe der aus gut wärmeleitendem Metall bestehenden Zwischenwand 6 angeordnet, so daß sie auch in unmittelbarer wärmeleitender Verbindung mit der Ausdehnungsflüssigkeit 9 steht. Dadurch wird erreicht, daß die über die Wärmeausdehnungsflüssigkeit 9 und das elektrische Temperaturfühlglied 14 erfaßten Temperaturwerte möglichst nahe beieinanderliegen.

Sowohl das Kapillarrohr 10 als auch das Füllrohr 11 sind im übrigen abgedichtet durch die Zwischenwand 6 hindurchgeführt, was der Ordnung halber noch erwähnt sei. Die Einbautiefe des Fühlergehäuses 1 ist bei der Montage so zu bemessen, daß die zylindrische Gehäusewand vom Boden 5 aus zumindest bis zur Höhe über dem elektrischen Temperaturfühlglied 14 in dem Medium liegt, dessen Temperatur es zu erfassen gilt.

Die Wirkungsweise des beschriebenen Fühlerelementes 1 ist wie folgt:
Die in dem abgeschlossenen Raum 8 enthaltene Ausdehnungsflüssigkeitsfüllung 9 bildet ein erstes Zustandsgrößenerfassungsmittel, das auf mechanischem Wege wirkt und das über das als erstes Signalausgangsmittel wirkende Kapillarrohr 10 ein für die am Meßort herrschende Temperatur kennzeichnendes Signal an die Schaltung 2 abgibt. Dazu ist das Kapillarrohr 10 mit einem in Gestalt einer Membrandose 18 ausgebildeten Weggeber verbunden, dessen Wellmembran 19 eine von einer Temperaturerhöhung am Meßort herrührende Ausdehnung der Ausdehnungsflüssigkeit 9 in eine entsprechende Bewegung eines angekuppelten Hebelmechanismus 20 umsetzt, der bei Erreichen eines vorbestimmten Grenzwertes einen Ausschalter 21 betätigt, welcher im Stromkreis einer mit 22 bezeichneten Heizvorrichtung liegt, die den Wärmestrom zum Meßort erzeugt.

Die auf diese Weise mechanisch wirkende Temperaturbegrenzung hat den Vorteil, daß sie keine Hilfsenergie benötigt und eigensicher ist. Sie zeichnet sich durch einen einfachen Aufbau aus, der kostengünstig mit einem sogenannten Thermostaten realisierbar ist.

Das elektrische Temperaturfühlglied 14 bildet ein zweites unabhängiges elektronisches Zustandsgrößenerfassungsmittel, das ebenfalls in dem Fühlergehäuse 1 angeordnet die Temperatur am Meßort erfaßt. Es gibt über seine eigene Signalausgangsmittel 15 bildenden Anschlußdrähte 15, die gegebenenfalls auch zu an dem Fühlergehäuse 1 oder an einem mit diesem verbundenen Teil angeordnete Klemmleisten etc. geführt sein können, für die erfaßte Temperatur kennzeichnende elektrische Signale an eine elektronische Regelschaltung 23, die im Stromkreis der Heizvorrichtung 22 liegt. Die elektronische Regelschaltung 23 bewirkt die für den Betriebsablauf z.B. der Waschmaschine erforderliche Temperaturregelung oder Steuerung und hat den Vorteil, daß im Zusammenwirken mit dem elektrischen Fühlglied 14 sie sich durch eine hohe Regelgenauigkeit bei frei wählbarer Schaltgenauigkeit und Schaltdifferenz auszeichnet, wobei der Umgebungstemperatureinfluß mit geringem Aufwand kompensiert werden kann. Die Anschlußdrähte 15 können im übrigen zur Zugentlastung bspw. um das Füllrohr 11 herumgeschlungen sein.

Eine eigensichere Ausführung der elektronischen Regelschaltung 23, die nur mit verhältnismäßig großem Aufwand erzielbar wäre, erübrigt sich, weil eine eigensichere Temperaturbegrenzung in bereits geschilderter Weise durch die mechanische Temperaturerfassung mittels des Ausdehnungsmediums 9 vorhanden ist, die allen Sicherheitsanforderungen genügt.

Die in Fig. 2 dargestellte abgewandelte Ausführungsform des Fühlerelementes 1a weist wiederum ein als Tiefziehteil aus Metall gefertigtes, zylindrisches, topf- oder rohrförmiges Fühlergehäuse 3a auf, das mit einem angeformten ebenen Boden 5a versehen und auf der dem Boden 5a gegenüberliegenden Seite in ein kappenartiges Flanschteil 24 bei 25 abgedichtet eingelötet ist. Das Flanschteil 24 ist mit einem angeformten Flanschteil 4a versehen. Durch entsprechende Bohrungen des Flanschteiles 24 sind das Kapillarrohr 10 und das Füllrohr 11 abgedichtet durchgeführt, die in den von dem Flanschteil 24 und dem Fühlergehäuse 3a umschlossenen Raum 8 münden, der wiederum mit einer Ausnehmungsflüssigkeit 9 gefüllt ist, die das erste mechanische Temperaturerfassungsmittel bildet.

Das Kapillarrohr 10 und das endseitig bei 12 verschlossene Füllrohr 11 liegen in unmittelbarer Nähe der Innenwandung des Fühlergehäuses 3a. Zwischen ihnen ist ein ein Teilgehäuse 25 bildendes Metallrohr koaxial zu dem zylindrischen Fühlergehäuse 3a angeordnet, das einen kleineren Durchmesser als das Fühlergehäuse 3a aufweist und einenends eine Umbördelung 26 trägt, mit der es abgedichtet außen mit dem Flanschteil 24 verlötet ist. Auf der anderen Seite ist das Teilgehäuse 25 bei 27 durch einen verlöteten Quetschverschluß verschlossen. Das durch den Flanschteil 24 durchgeführte Teilgehäuse 25 umschließt wiederum die Kammer 13, in der ein elektrisches Temperaturfühlglied 14 in Gestalt einer NTC-Halbleiterpille angeordnet ist, das die zweiten elektrischen Temperaturerfassungsmittel bildet. Die elektrischen Anschlußdrähte und deren Schutzhüllen sind wiederum mit 15 bzw. 16 bezeichnet. Ähnlich wie bei der Ausführungsform nach Fig. 1 ist die Kammer 13 mit Vergußmasse 17 gefüllt.

Im Vergleich zu der Ausführungsform nach Fig. 1 ist, abhängig von dem Durchmesser des zylindrischen Fühlergehäuses 1 bzw. 1a, die in Fig. 2 dargestellte Ausführungsform in der Herstellung etwas günstiger, weil keine in der Tiefe des Fühlergehäuses 1a liegenden Lötstellen vorhanden sind, wie sie in Gestalt der Lötstellen 7 für die Zwischenwand 6 in Fig. 1 vorzusehen sind.

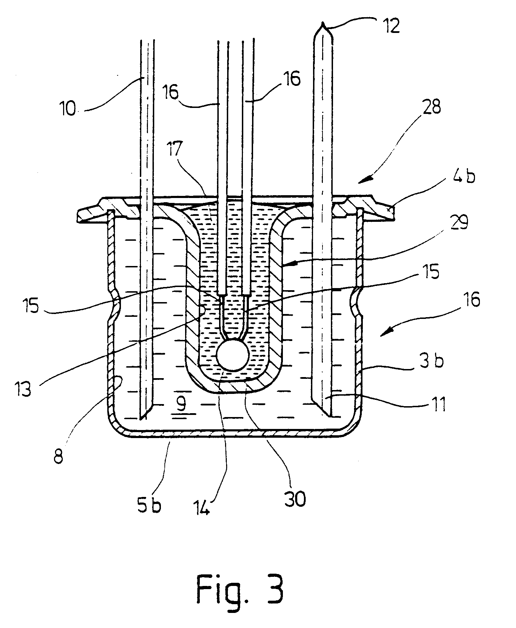

In Fig. 3 ist eine Ausführungsform des Fühlerelementes 1b dargestellt, bei der das ebenfalls aus einem Metall, bspw. Edelstahl, tiefgezogene zylindrische, topfartige Fühlergehäuse 3b nach Art einer Fühlerdose ausgebildet ist. Das Fühlergehäuse 3b ist im Bereiche seiner Öffnung an ein topfförmiges metallisches Tiefziehteil 28 abgedichtet angelötet, das, ausgehend von einem im wesentlichen ringscheibenförmigen Flanschbereich 4b, einen in das Innere des zylindrischen Fühlergehäuses 3b ragenden, koaxial zu diesem angeordneten und im wesentlichen zylindrischen Topfteil 29 aufweist, der die Kammer 13 umschließt und mit seinem angeformten Bodenteil 30 bis in die unmittelbare Nähe des Bodens 5b des Fühlergehäuses 3b ragt.

Der das ein Teilgehäuse bildende Topfteil 29 umgebende Raum 8 ist wiederum mit Ausdehnungsflüssigkeit 9 gefüllt, die das erste Temperaturerfassungsmedium bildet. In ihn ragen in der Nähe der Außenwandungen des Fühlergehäuses 3b das Kapillarrohr 10 und das Füllrohr 11, das bei 12 verschlossen ist. Das Kapillarrohr 10 und das Füllrohr 12 sind abgedichtet durch das Tiefziehteil 28 durchgeführt.

In der von dem Topfteil 29 umgrenzten Kammer 13 ist ein zweites elektrisches Temperaturerfassungsmittel angeordnet, das ein elektrisches Temperaturfühlglied 14 in Gestalt einer NTC-Halbleiterpille aufweist, deren Anschlußdrähte zusammen mit den Schutzhüllen wiederum mit 15 bzw. 16 bezeichnet sind. Der Innenraum des Topfteils 29 ist mit Vergußmasse 17 ausgegossen.

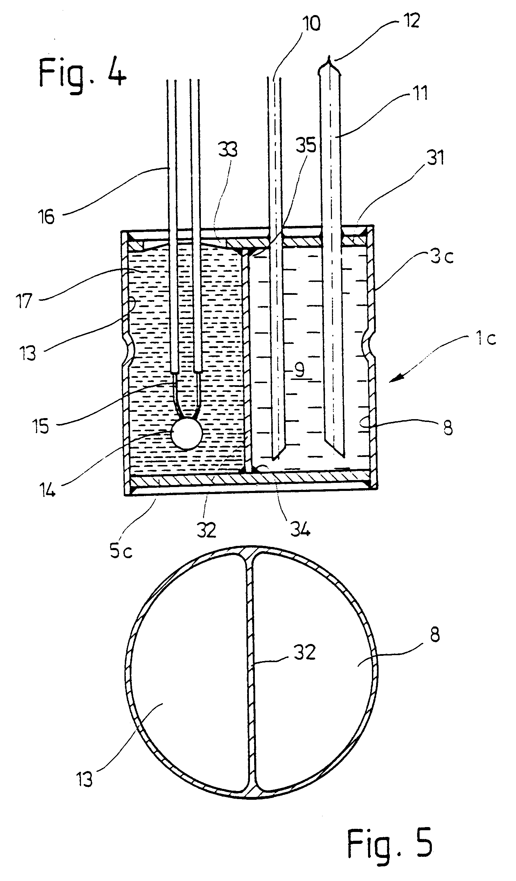

Bei der in den Fig. 4,5 dargestellten weiteren Ausführungsform des neuen Fühlerelementes 1c ist das Fühlergehäuse 3c in Form eines zylindrischen Rohres ausgebildet, das durch einen eingelöteten Boden 5c und eine eingelötete Deckwand 31 hermetisch abgeschlossen ist. Der Innenraum des Fühlergehäuses 3c ist durch eine mittige Längstrennwand 32 in den das Ausdehnungsmedium 9 aufnehmenden Raum 8 und in die Kammer 13 für das elektrische Temperaturfühlglied 14 unterteilt, das wiederum aus einer NTc-Halbleiterpille besteht, deren Anschlußdrähte mit 15 bezeichnet sind, während die zugehörigen Schutzhüllen bei 16 angedeutet sind.

Das Kapillarrohr 10 und das Füllrohr 11 sind abgedichtet durch die Deckwand 31 in den Raum 8 geführt, während die Kammer 13 mit Vergußmasse 17 ausgegossen ist, die durch eine entsprechende Öffnung 33 in der Deckwand 31 eingegossen wurde.

Die Zwischentrennwand 32 kann entweder - wie in Fig.4 veranschaulicht - als getrenntes Teil endseitig bei 34, 35 mit dem Boden 5c bzw. der Deckwand 31 abgedichtet verlötet sein, doch ist es auch denkbar, das Fühlergehäuse 3c zusammen mit der Zwischentrennwand 32 als Tiefziehteil oder Strangpreßteil auszubilden, wie dies in Fig. 5 dargestellt ist.

Auch bei dieser Ausführungsform bildet die Ausdehnungsflüssigkeit 9 das erste mechanische Temperaturerfassungsmittel, während das elektrische Temperaturfühlglied 14 das zweite elektrische Temperaturerfassungsmittel ist.

Durch die Längsteilung des Fühlergehäuses 3c wird erreicht, daß sowohl der die Ausdehnungsflüssigkeit 9 enthaltende Raum 8 als auch die das elektrische Temperaturfühlglied 14 aufnehmende Kammer 13 unmittelbar an den Boden 5c angrenzen. Dies ist für bestimmte Anwendungsfälle mit entsprechendem Wärmefluß von Vorteil.

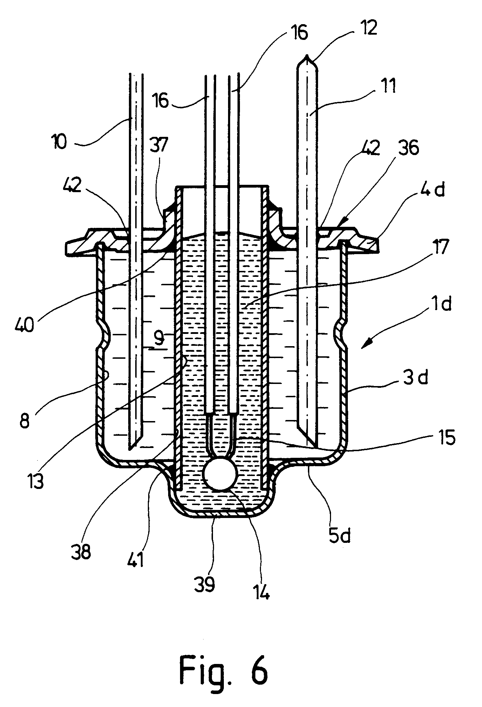

Die Ausführungsform des neuen Fühlerelementes 1d, wie sie in Fig. 6 dargestellt ist, ist im Prinzip ähnlich jener nach Fig. 3. Auch hier ist das Fühlergehäuse 3d als Tiefziehteil aus Metall, bspw. Edelstahl, hergestellt und nach Art einer Fühlerdose ausgebildet. Es ist endseitig abgedichtet an ein Tiefziehteil 36 angelötet, das das angeformte Flanschteil 4d trägt und mit einer mittigen Öffnung versehen ist, deren Berandung bei 37 nach außen hochgebördelt ist.

In das Fühlergehäuse 3d ist ein Teilgehäuse 38 in Gestalt eines zylindrischen Rohres abgedichtet eingesetzt, das mit der Aufbördelung 37 und mit einer in den Boden 5d des Fühlergehäuses 3d eingeformten, topfartigen Vertiefung 39 bei 40 bzw. 41 verlötet ist.

Das nach außen hin einseitig offene, rohrförmige Teilgehäuse umschließt die Kammer 13, die das elektrische Temperaturfühlglied 14 in Gestalt einer NTC-Halbleiterpille aufnimmt, deren Anschlußdrähte 15 von Schutzhüllen 16 umgeben sind und gemeinsam mit diesen durch das offene Gehäuseende nach oben herausgeführt sind. Im übrigen ist die Kammer 13 mit Vergußmasse 17 vergossen.

Der das Teilgehäuse umgebende Ringraum 8 ist mit der Ausdehnungsflüssigkeit 9 gefüllt; in ihn ragen das Kapillarrohr 10 und das Füllrohr 11, deren Durchführungen bei 42, 43 dicht verlötet sind.

Die Wirkungsweise dieses Fühlerelementes ist gleich wie die des Fühlerelementes nach Fig. 3. Der Vorteil der vorliegenden Ausführungsform nach Fig. 6 liegt darin, daß das elektrische Temperaturfühlglied 14 unmittelbar in der Nähe der Bodenwandung des Fühlergehäuses 3d angeordnet ist und über deren Boden 5d axial sogar noch etwas vorragt, so daß sich bei entsprechender Einbaulage besonders gute Wärmeübertragungsverhältnisse von dem Medium ergeben, dessen Temperatur zu erfassen ist. Ebenso wie die Ausführungsformen nach den Fig. 3,4 ist diese Ausführungsform insbesondere für Fühlergehäuseaußendurchmesser von größer 10 mm geeignet, während die mehr patronenförmige Konstruktion bspw. nach Fig. 1 auch mit kleinerem Außendurchmesser des Fühlergehäuses hergestellt werden kann.

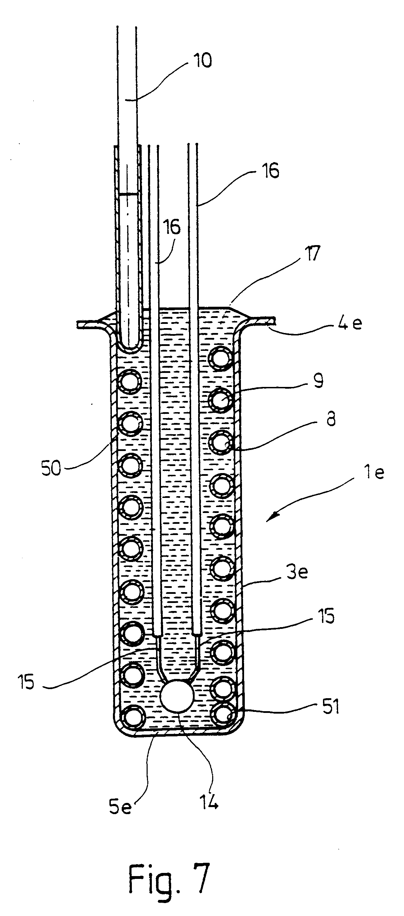

In Fig. 7 ist eine Ausführungsform eines Fühlerelementes 1e beschrieben, deren aus Metall tiefgezogenes Fühlergehäuse 3e gleichgestaltet ist wie bei der Ausführungsform nach Fig. 1, so daß sich insoweit weitere Ausführungen erübrigen. Gleiche Teile sind mit gleichen Bezugszeichen versehen und nicht nochmals erläutert.

Abweichend von der Ausführungsform nach Fig. 1 ist aber bei der Ausführungsform nach Fig. 7 der das Ausdehnungsmedium 9 enthaltende Raum 8 in einem gewendelten Rohr 50 enthalten, dessen Wendel in der aus Fig. 7 ersichtlichen Weise in dem zylindrischen Fühlergehäuse 3e unmittelbar an dessen Innenwandung anliegend angeordnet und an einem Ende mit dem Kapillarrohr 10 verbunden sowie an dem anderen Ende in der Nähe des Bodens 5e bei 51 verschlossen ist. In dem von dem gewendelten Rohr 50 umgebenen Raum ist das Temperaturfühlglied 14 (NTC-Halbleiterpille) in der unmittelbaren Nähe des Bodens 5e angeordnet; seine Zuleitungsdrähte 15 mit den Schutzhüllen 16 sind durch diesen Raum nach außen geführt. Der Innenraum des Fühlergehäuses 3e ist ansonsten wieder mit der Vergußmasse 17 ausgegossen.

Der Vorteil dieser Ausführungsform liegt u.a. darin, daß zum einen das elektrische Temperaturfühlglied 14 nahe dem Boden 5e angeordnet ist, so daß eine Einbauanordnung möglich ist, bei der das zu überwachende Medium insbesondere auf den Boden einwirkt. Das gewendelte Rohr 50, dessen Durchmesser etwa jenem der Kapillare 10 entspricht, zeichnet sich durch eine verhältnismäßig große, innerhalb des Fühlergehäuses 3e liegende Oberfläche aus, mit der Folge, daß der ganze Temperaturfühler 1e eine besonders kurze Reaktionszeit aufweist. Als Ausdehnungsflüssigkeit 9 wird in diesem Falle mit Vorteil ein im Betriebsbereich verdampfendes Medium gewählt, so daß sich ein sogenanntes "Dampfdrucksystem" ergibt, dessen Stellhub der Membrane 19 des zugeordneten mechanischen Weggebers 18 in Abhängigkeit von der Temperatur nichtlinear verläuft.

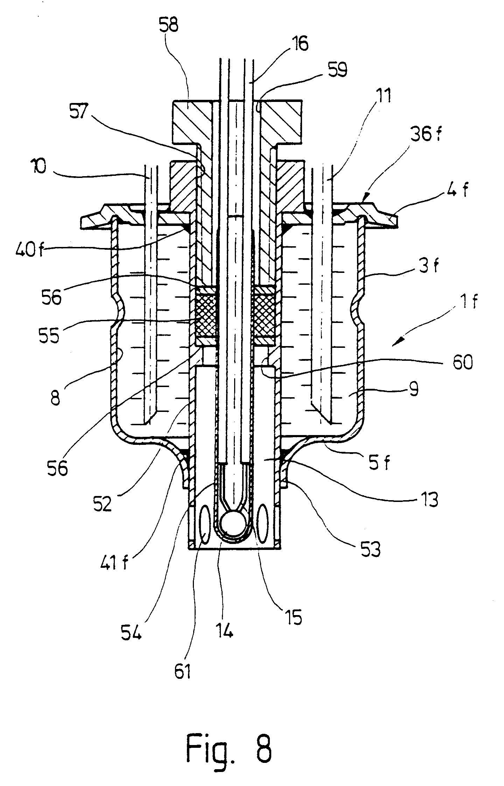

Um die elektrische Durchschlagsfestigkeit des räumlich nahe der Kupferrohrwendel 50 angeordneten Temperaturfühlgliedes 14 zu gewährleisten, ist dieses mit einer Schutzhülle aus Isoliermaterial umgeben, die gegebenenfalls noch besonders verstärkt ist. Grundsätzlich wäre es aber auch denkbar, in den von dem gewendelten Rohr 50 umschlossenen Raum ein zumindest unten geschlossenes Glasröhrchen einzusetzen, wie es im Prinzip noch anhand von Fig. 8 erläutert werden wird, das das elektrische Temperaturfühlglied 14 aufnimmt und seinerseits vergossen sein kann.

Auch bei diesem Ausführungsbeispiel bildet die Ausdehnungsflüssigkeit 9 das erste mechanische Temperaturerfassungsmittel, während das zweite elektrische Temperaturerfassungsmittel in Gestalt des elektrischen Temperaturfühlgliedes 14 vorliegt.

Die in Fig. 8 veranschaulichte weitere Ausführungsform eines neuen Fühlerelementes 1f ist ähnlich dem Fühlerelement nach Fig. 6 aufgebaut, mit dem Unterschied jedoch, daß das das Zusatzgehäuse 38 bildende Rohr 52 beidseitig offen durch das topfförmig tiefgezogene metallische Fühlergehäuse 3f koaxial zu diesem verlaufend durchgeführt ist. Das zylindrische Rohr 52 ist sowohl mit dem den Flanschteil 4f tragenden Tiefziehteil 36f als auch mit einer am Boden 5f des nach Art einer Fühlerdose ausgebildeten Fühlergehäuses 3f vorgesehenen Aufbördelung 53 an zwei Lötstellen 40f und 41f (vergl. Fig. 6) abgedichtet verbunden. Der das Rohr 52 umgebende Raum 8 ist wiederum mit der Ausdehnungsflüssigkeit 9 gefüllt; in ihn ragen das Kapillarrohr 10 und das Füllrohr 11, die beide abgedichtet durch das Tiefziehteil 36f durchgeführt sind. Die Ausdehnungsflüssigkeit 9 bildet das erste mechanische Temperaturerfassungsmittel.

Das zweite elektrische Temperaturerfassungsmittel ist durch ein Temperaturfühlglied 14 in Gestalt einer NTC-Halbleiterpille ausgeführt, die in einem länglichen, zylindrischen Schutzgehäuse in Form eines beidseitig verschlossenen Glasrohres 54 angeordnet ist, durch dessen obere Stirnwand die Anschlußdrähte 15 - gegebenenfalls mit Schutzhüllen 16 - durchgeführt sind. Das Glasrohr 54 ist in einem elastischen Dichtring 55 gehaltert, der zwischen zwei Metallringscheiben 56 liegend in das Rohr 52 eingesetzt ist. An seinem oberen Ende ist das Rohr 52 mit einem Gewindeansatz 57 versehen, in den eine Druckschraube 58 eingeschraubt ist, die eine Durchführungsöffnung 59 für die elektrischen Anschlußdrähte 15 aufweist und durch die der elastische Dichtungsring 55 gegen eine in dem Rohr 52 vorgesehene Ringschulter 60 axial angepreßt ist.

Auf diese Weise ist das Glasrohr 54 in dem äußeren Rohr 52 abgedichtet gehaltert, derart, daß in Einbaulage kein Medium von innen her durch die Druckschraube 58 durchtreten kann.

Diese Ausführungsform gestattet es, das elektrische Temperaturfühlglied 14 bis unmittelbar an die untere Mündung des Rohres 52 vorzuverlegen, in deren Bereich radiale Durchströmöffnungen 61 vorgesehen sind, die einen unmittelbaren Kontakt zwischen dem zu überwachenden, insbesondere flüssigen Medium und dem elektrischen Temperaturfühlglied 14 gewährleisten. Gleichzeitig ist das empfindliche elektrische Temperaturfühlglied 14, ebenso wie das Glasrohr 54, durch das metallische umgebende Schutzrohr 52 gegen mechanische Beschädigungen wirksam geschützt.

Die in Fig. 8 gezeigte Ausführungsform des Fühlerelementes 1f ist sehr vielseitig einsetzbar, weil sie ohne weiteres einen Austausch des elektrischen Temperaturfühlgliedes 14 gegen ein eine andere Zustandsgröße erfassendes Fühlglied erlaubt.

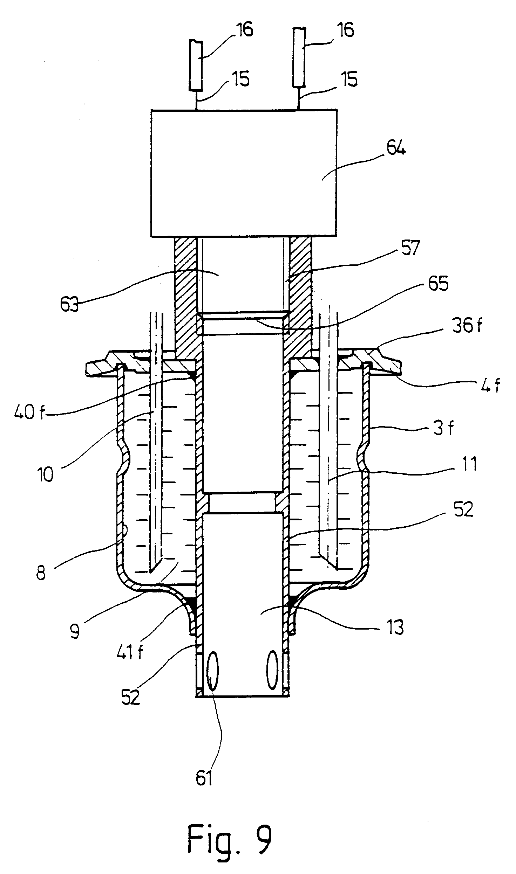

Dies ist beispielhaft in Fig. 9 veranschaulicht, in der mit Fig. 8 gleiche Teile mit gleichen Bezugszeichen versehen und nicht nochmals erläutert sind:

Anstelle der Druckschraube 58 ist bei 57 in das ansonsten leere Rohr 52 der Anschlußstutzen 63 eines bei 64 angedeuteten Druckfühlgliedes eingeschraubt, dessen bspw. durch eine biegsame Membran gebildete Druckaufnahmefläche 65 über das Rohr 52 mit dem zu messenden Medium beaufschlagt ist. Das Druckfühlglied 64 kann als elektrisches Druckfühlglied, bspw. auf piezoelektrischer Basis arbeitend, ausgebildet sein, wobei die Drucksignalabgabe über die Anschlußleitungen 15 erfolgt. Für bestimmte Anwendungsfälle kann es aber auch zweckmäßig sein, ein Druckfühlglied zu benutzen, das mit einer mechanischen Signalabgabe arbeitet und das bspw. in Gestalt einer Membrandose ausgebildet sein kann, die mit einer inkompressiblen Flüssigkeit, etwa Öl, gefüllt ist und über ein angeschlossenes Kapillarrohr ein Drucksignal auf einen Weggeber gibt, der ähnlich dem Weggeber 18 nach Fig. 1 ausgebildet ist.

Im übrigen kann das Druckfühlglied 64 auch innerhalb des Rohres 52 angeordnet sein, womit sich dann ähnliche Verhältnisse wie in Fig. 8 ergeben. Voraussetzung dafür ist naturgemäß, daß das Druckfühlglied 64 in seinen Abmessungen entsprechend klein ist.

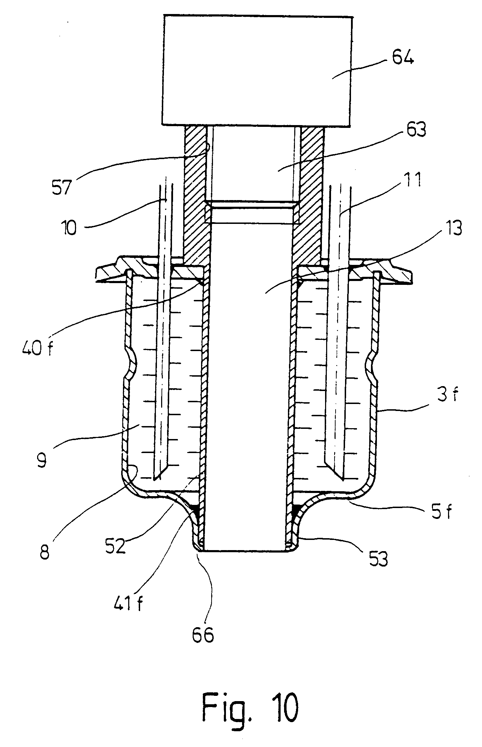

Die Fühlergehäuseausbildung mit dem Rohr 52, wie sie in den Fig. 8,9 veranschaulicht ist, kann schließlich noch in der aus Fig. 10 ersichtlichen Weise abgewandelt werden, wenn aufgrund der speziellen Einsatzverhältnisse die Durchströmöffnungen 61 entbehrlich sind.

Mit den Fig. 8,9 gleiche Teile sind in Fig. 10 mit gleichen Bezugszeichen versehen und nicht weiter erläutert. Das das dosenförmige tiefgezogene metallische Fühlergehäuse 3f durchquerende, ebenfalls metallische Zentralrohr 52 endet innerhalb des Bereiches der Aufbördelung 53 des Bodens 5f. Die Aufbördelung 53 ist randseitig bei 66 nach innen etwas eingezogen, so daß sie das Rohr 52 axial abstützt und im übrigen endseitig völlig umgibt.

Für alle beschriebenen Ausführungsformen gilt, daß sowohl das Temperaturfühlglied 14 als auch das Druckfühlglied 64 durch auf andere Zustandsgrößen ansprechende Fühlglieder ersetzt werden können. Eine solche andere Zustandsgröße wäre z.B. die Feuchte. Zum Beispiel könnte ein Feuchte-Fühlerelement für einen Wäschetrockner, ähnlich wie in den Fig. 8 bis 10, hergestellt werden, wenn eben ein entsprechendes Feuchtefühlglied eingesetzt wird.

Außerdem sind Ausführungsformen denkbar, bei denen mit Rücksicht auf die besonderen Meßbedingungen und Einbauverhältnisse am Meßort das elektrische Fühlglied 14 - oder das diesem entsprechende Fühlglied für eine andere Zustandsgröße - in dem Fühlergehäuse außermittig angeordnet ist oder auch mehrere solcher Fühlglieder - gegebenenfalls räumlich in spezieller Weise verteilt - in dem einzigen Fühlergehäuse untergebracht sind.Abhängig von der Art der zu überwachenden Geräte können in dem einzigen Fühlergehäuse auch lediglich mechanisch oder elektrisch wirkende Fühlglieder (Sensoren) für gleiche oder verschiedene Zustandsgrößen vorgesehen sein, wobei es grundsätzlich auch vorstellbar ist, daß das Fühlergehäuse selbst zumindest bereichsweise elastisch ausgebildet ist, so daß - wie schon erwähnt - die der Ausdehnungsflüssigkeit 9 entsprechende Druckmediumsfüllung Drucksignale abgibt.

**Patentansprüche**

1. Auf einen physikalischen Zustand an einem Meßort ansprechendes Fühlerelement für eine zustandsabhängige Schalt-, Regel- oder Steuereinrichtung, mit einem am Meßort anzuordnenden, Mittel zur Erfassung der jeweiligen Zustandsgröße aufnehmenden Fühlergehäuse, dem Signalausgangsmittel für den jeweiligen Zustand kennzeichnende Signale zugeordnet sind, die von den Zustandsgrößen-Erfassungsmitteln erzeugt werden, dadurch gekennzeichnet, daß in dem Fühlergehäuse (3, 3a ... 3f) wenigstens zwei getrennte Mittel (9, 14) zur Erfassung einer einzigen Zustandsgröße oder mehrerer verschiedener Zustandsgrößen angeordnet sind, denen jeweils eigene Signalausgangsmittel (10; 15) zugeordnet sind.

2. Fühlerelement nach Anspruch 1, dadurch gekennzeichnet, daß zumindest ein erstes Zustandsgrößen-Erfassungsmittel (9) mit mechanischer Signalabgabe und wenigstens ein zweites Zustandsgrößen-Erfassungsmittel (14) mit elektrischer Signalabgabe ausgebildet ist.

3. Fühlerelement nach Anspruch 1, dadurch gekennzeichnet, daß zumindest ein erstens und zumindest ein zweites Zustandsgrößen-Erfassungsmittel mit elektrischer oder mechanischer Signalabgabe ausgebildet sind.

**4.** Fühlerelement nach einem der vorhergehenden Ansprüche, dadurch gekennzeichnet, daß wenigstens ein Zustandsgrößen-Erfassungsmittel (9, 14) zur Erfassung einer Temperatur ausgebildet ist.

**5.** Fühlerelement nach einem der vorhergehenden Ansprüche, dadurch gekennzeichnet, daß wenigstens ein Zustandsgrößen-Erfassungsmittel (64) zur Erfassung eines Druckes ausgebildet ist.

**6.** Fühlerelement nach einem der vorhergehenden Ansprüche, dadurch gekennzeichnet, daß wenigstens ein Zustandsgrößen-Erfassungsmittel zur Erfassung der Feuchte ausgebildet ist.

**7.** Fühlerelement nach Anspruch 4, dadurch gekennzeichnet, daß das erste Zustandsgrößen-Erfassungsmittel ein in dem Fühlergehäuse (3; 3a ...3f) angeordnetes, auf die Temperatur am Meßort ansprechendes Ausdehnungsmedium (9) und das zweite Zustandsgrößen-Erfassungsmittel ein elektrisches Temperaturfühlglied (14) aufweist.

**8.** Fühlerelement nach Anspruch 7, dadurch gekennzeichnet. daß das Ausdehnungsmedium (9) in einem abgeschlossenen Raum (8) des Fühlergehäuses angeordnet ist und daß das Fühlergehäuse zumindest eine mit dem Ausdehnungsmedium (9) und/oder der Wandung des Fühlergehäuses in gut wärmeleitender Verbindung stehende Kammer (13) enthält, in der sich das elektrische Temperaturfühlglied (14) befindet.

**9.** Fühlerelement nach Anspruch 8, dadurch gekennzeichnet, daß die Kammer (13) zumindest teilweise mit einer das Temperaturfühlglied (14) umschließenden Vergußmasse (17) abdichtend gefüllt ist.

**10.** Fühlerelement nach Anspruch 8 oder 9, dadurch gekennzeichnet, daß in dem topf- oder rohrartigen Fühlergehäuse (3) der das Ausdehnungsmedium (9) enthaltende Raum (8) im Bodenbereich (5) abgeteilt ist und daß die Kammer (13) in einem daran anschließenden Gehäusebereich ausgebildet ist.

**11.** Fühlerelement nach Anspruch 10, dadurch gekennzeichnet, daß die Kammer (13) von dem das Ausdehnungsmedium (9) enthaltenden Raum (8) durch eine Zwischenwand (6) abgetrennt ist und daß durch die Kammer (13) wenigstens ein in den das Ausdehnungsmedium enthaltenden Raum (8) mündendes Kapillarrohr (10) geführt ist.

**12.** Fühlerelement nach einem der Ansprüche 8 bis 11, dadurch gekennzeichnet, daß die Kammer (13) in einem in das Fühlergehäuse von außen her zugänglich abgedichtet eingesetzten rohr- oder topfförmigen Teilgehäuse (25, 29, 38, 52) ausgebildet ist, das zumindest teilweise von dem Ausdehnungsmedium (9) umgeben ist.

**13.** Fühlerelement nach einem der Ansprüche 8 bis 12, dadurch gekennzeichnet, daß in dem topf- oder rohrartigen Fühlergehäuse (3c; 3d) die Kammer (13) und der von dieser abgeteilte, das Ausdehnungsmedium (9) enthaltende Raum (8) sich bis zum Boden (5c, 5d) des Fühlergehäuses erstreckend ausgebildet sind.

**14.** Fühlerelement nach Anspruch 13, dadurch gekennzeichnet, daß das Fühlergehäuse (3c) durch eine Längstrennwand (32) in die Kammer (13) und in den das Ausdehnungsmedium (9) enthaltenden Raum (8) unterteilt ist.

**15.** Fühlerelement nach Anspruch 12, dadurch gekennzeichnet, daß das Teilgehäuse (38, 52) mit dem Boden des Fühlergehäuses (3d, 3f) verbunden ist.

**16.** Fühlerelement nach Anspruch 7, dadurch gekennzeichnet, daß das elektrische Temperaturfühlglied (14) unmittelbar in dem Ausdehnungsmedium (9) untergetaucht angeordnet ist.

**17.** Fühlerelement nach einem der Ansprüche 7 bis 16, dadurch gekennzeichnet, daß das Ausdehnungsmedium (9) in einem in das Fühlergehäuse (3e) angeordneten gewendelten Rohr (50) enthalten ist und daß das elektrische Temperaturfühlglied (14) in dem von dem Rohr (50) umschlossenen Raum liegt.

**18.** Fühlerelement nach Anspruch 17, dadurch gekennzeichnet, daß das gewendelte Rohr (50) nahe der Wandung des Fühlergehäuses (3e) angeordnet und das Fühlergehäuse mit einer das elektrische Temperaturfühlglied (14) umschließenden Vergußmasse (17) zumindest teilweise gefüllt ist.

**19.** Fühlerelement nach einem der vorhergehenden Ansprüche, dadurch gekennzeichnet, daß das Fühlergehäuse (3f) eine im Bereiche des Meßortes nach außen zu offene Kammer (13) aufweist, in der ein Zustandsgrößen-Fühlglied (14) angeordnet ist, das von einer mediumsdichten Schutzhülle (54) umgeben ist.

**20.** Fühlerelement nach Anspruch 19, dadurch gekennzeichnet, daß das Fühlglied (14) in einem hermetisch verschlossenen Schutzgehäuse (54) angeordnet ist und daß in der Kammer (13) durch eine Querwand (55) ein nach außen zu abgedichteter Teil abgeteilt ist, durch den die Signalausgangsmittel (15) des Fühlgliedes verlaufen.

**21.** Fühlerelement nach Anspruch 20, dadurch gekennzeichnet, daß das Schutzgehäuse (54) in der Querwand (55) abgedichtet gehaltert ist.

**22.** Fühlerelement nach einem der Ansprüche 19 bis 21, dadurch gekennzeichnet, daß die Kammer (13) in Gestalt eines das Fühlergehäuse (3f) durchdringenden Rohres (52) ausgebildet ist, das von einem ein Ausdehnungsmedium (9) aufnehmenden Raum (8) zumindest teilweise umgeben ist.

**23.** Fühlerelement nach Anspruch 22, dadurch gekennzeichnet, daß das Rohr (52) einenends Halterungs- und/oder Klemmittel (57, 58) für das Fühlglied (14) aufweist.

**24.** Fühlerelement nach Anspruch 23, dadurch gekennzeichnet, daß die Halterungs- und/oder Klemmittel einen zur Aufnahme eines Befestigungsstutzens (63) des Fühlgliedes (64) oder eines Klemmelementes (58) dienenden Anschlußteil (57) aufweisen.

Fig. 1

Fig. 2

Fig. 3

Fig. 4

Fig. 5

Fig. 6

Fig. 7

Fig. 8

Fig. 9

Fig. 10